(19) Europäisches Patentamt
European Patent Office
Office européen des brevets

(11) EP 4 116 378 A1

(12) EUROPEAN PATENT APPLICATION

(43) Date of publication:
**11.01.2023 Bulletin 2023/02**

(21) Application number: **21184348.7**

(22) Date of filing: **07.07.2021**

(51) International Patent Classification (IPC):
***C08L 69/00*** *(2006.01)*

(52) Cooperative Patent Classification (CPC):
(C-Sets available)
**C08L 69/00;** C08L 2205/025; C08L 2205/035

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **CHENG, Yunan**
  **Shanghai, 201319 (CN)**
- **ZHENG, Yun**
  **Shanghai, 201319 (CN)**
- **LIU, Xing**
  **Shanghai, 201319 (CN)**

(74) Representative: **Dehns**
**St. Bride's House**
**10 Salisbury Square**
**London EC4Y 8JD (GB)**

# (54) POLYCARBONATE COMPOSITIONS HAVING IMPROVED IMPACT PROPERTIES

(57) Thermoplastic compositions include: (a) from 10 wt% to 95 wt% of a polycarbonate component; (b) from 0.1 wt% to 50 wt% of a reinforcing filler; (c) from 0.1 wt% to 10 wt% of an impact modifier component having a linear polymer structure; and from 0.1 wt% to 10 wt% of a hydrocarbon additive. In particular aspects the impact modifier component has a linear, non-polarized polymer structure, and the composition has improved Izod impact properties and/or gloss properties as compared to a reference composition that includes a polarized impact modifier instead of the impact modifier component.

EP 4 116 378 A1

(52) Cooperative Patent Classification (CPC): (Cont.)

C-Sets
**C08L 69/00, C08K 3/04, C08K 5/01, C08K 7/14, C08L 23/0869;**
**C08L 69/00, C08K 3/04, C08K 5/01, C08K 7/14, C08L 51/04;**
**C08L 69/00, C08K 3/04, C08K 5/01, C08K 7/14, C08L 53/02;**
**C08L 69/00, C08K 3/04, C08K 5/01, C08K 7/14, C08L 53/02, C08L 69/00, C08L 69/00**

## Description

### FIELD OF THE DISCLOSURE

The present disclosure relates to polycarbonate compositions, and in particular to polycarbonate compositions including an impact modifier component having a linear polymer structure and a hydrocarbon additive.

### BACKGROUND OF THE DISCLOSURE

Glass filled polycarbonate has been widely used for mobile phone frames due to a good balance of cost and performance. Conventional manufacturing processes include first molding the polycarbonate material and then painting the material to produce a glossy appearance and a chemically resistant surface.

Recently there has been a trend of using paint-free constructions due to cost considerations and enhanced processing flexibility. When paint is omitted, however, the requirements for the polycarbonate surface are higher - for example the surface must have a very high gloss, good mechanical performance, and good chemical resistance.

To achieve high gloss, the dispersion of additives in the compositions (such as impact modifiers) must be well controlled. Typically impact modifiers have a core-shell or linear polymer construction. Core-shell impact modifiers are synthesized with a specific particle size. The particle size can be controlled so that it has good dispersion in the polycarbonate resin. As a result the polycarbonate composition can have very good gloss properties. Unfortunately, however, the small particle size of these impact modifiers results in relatively low impact modification (mechanical) properties.

In contrast, linear impact modifiers are synthesized as individual polymers and do not have a specific physical size. Their dispersion and distribution size depends on the affinity to the resin (e.g., polycarbonate) and thus whether the impact modifier aggregates in the resin. For example, when the linear impact modifier has a high affinity to the resin, the dispersion is good and the aggregation particle size is smaller; when the linear impact modifier has a low affinity to the resin, the dispersion is poor and the aggregation particle size is larger. Typically the larger particle size results in better impact modification performance but poorer uniformity and surface gloss.

In 5G applications, a low dielectric constant (Dk) and low dissipation factor (Df) composition including polycarbonate and a reinforcing filler (e.g., glass fiber) is desired. Due to the structural requirements of the mobile phone housing, however, hardness and mechanical properties must also be considered. Accordingly, a polycarbonate composition having a high hardness, good mechanical properties and good dielectric properties is desired. Polycarbonate copolymers having good dielectric properties and high hardness have been synthesized, but they have poor mechanical (e.g., impact) properties. Impact modifiers may be added to the compositions, but in some cases the soft chains of the impact modifier decrease hardness and in other cases the polarized groups of the impact modifier decrease the dielectric properties. As such, it is difficult to balance the dielectric, hardness and mechanical properties of the desired compositions.

These and other shortcomings are addressed by aspects of the present disclosure.

### SUMMARY

Aspects of the disclosure relate to thermoplastic compositions including: (a) from 10 wt% to 95 wt% of a polycarbonate component; (b) from 0.1 wt% to 50 wt% of a reinforcing filler; (c) from 0.1 wt% to 10 wt% of an impact modifier component having a linear polymer structure; and from 0.1 wt% to 10 wt% of a hydrocarbon additive. In particular aspects the impact modifier component has a linear, non-polarized polymer structure, and the composition has improved Izod impact properties and/or gloss properties as compared to a reference composition that includes a polarized impact modifier instead of the impact modifier component.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A and 1B are SEM images (1000x and 5000x magnification, respectively) of polycarbonate composition C1.1 described herein.
FIGS. 2A and 2B are SEM images (1000x and 5000x magnification, respectively) of polycarbonate composition C1.4 described herein.
FIGS. 3A and 3B are SEM images (1000x and 5000x magnification, respectively) of polycarbonate composition C1.5 described herein.

FIGS. 4A and 4B are SEM images (1000x and 5000x magnification, respectively) of polycarbonate composition C1.6 described herein.

FIGS. 5A and 5B are SEM images (1000x and 5000x magnification, respectively) of polycarbonate composition C1.8 described herein.

FIGS. 6A and 6B are SEM images (1000x and 5000x magnification, respectively) of polycarbonate composition C1.7 described herein.

FIGS. 7A and 7B are SEM images (1000x and 5000x magnification, respectively) of polycarbonate composition C1.9 described herein.

## DETAILED DESCRIPTION

The present disclosure relates to glass-filled polycarbonate systems including a linear-polymer-structured impact modifier and a hydrocarbon-structured flow promoter. The compositions have well-controlled dispersion of the impact modifier with considerable particle size. As such the compositions have good mechanical performance and gloss properties.

The present disclosure also relates to a new structure of hydrocarbon found to be an effective additive to balance mechanical, hardness and dielectric performance in a polycarbonate copolymer system. It can be applied alone in the copolymer system, or can be combined with low-polarized impact modifiers such as styrene-ethylene/1-butene-styrene (SEBS).

The compositions have good dielectric properties (low dielectric constant (Dk) and dissipation factor (Df)) and are suitable for use in electronics applications requiring good surface hardness and mechanical performance.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate component" includes compositions including two or more polycarbonate components.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

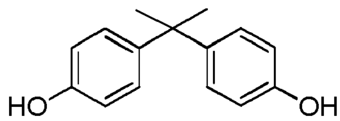

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to thermoplastic compositions including: (a) from 10 wt% to 95 wt% of a polycarbonate component; (b) from 0.1 wt% to 50 wt% of a reinforcing filler; (c) from 0.1 wt% to 10 wt% of an impact modifier component having a linear polymer structure; and (d) from 0.1 wt% to 10 wt% of a hydrocarbon additive. The combined weight percent value of all components does not exceed 100 wt. %, and all weight percent values are based on the total weight of the composition.

The polycarbonate component may include in some aspects a polycarbonate homopolymer, a polycarbonate copolymer, or a combination thereof. In a specific aspect the polycarbonate component includes a polycarbonate homopolymer. Exemplary polycarbonate monomers suitable for use in aspects of the disclosure are shown in formulas (1a)-(1c) below:

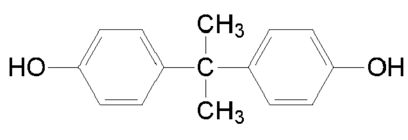
(1a)

BPA

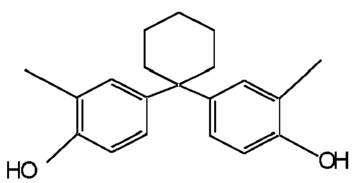
(1b)

DMBPC

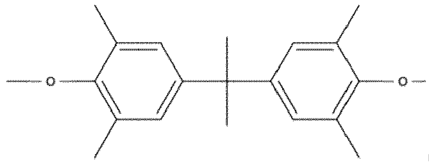

(1c)

2,2-bis (3-methyl-4-hydroxyphenol) propane, 2,2-bis (3,5-dimethyl-4-hydroxyphenol) propane

In particular aspects the polycarbonate copolymer includes a monomer including dimethyl bisphenol cyclohexane (DMBPC) monomer, a bisphenol A (BPA) monomer, or a combination thereof. In further aspects the polycarbonate copolymer includes a monomer having from 1 to 8 methyl groups on a benzyl ring. In certain aspects the polycarbonate copolymer includes a monomer having from 2 to 4 methyl groups on a benzyl ring. In even further aspects the monomer includes 2,2-bis (3-methyl-4-hydroxyphenol) propane, 2,2-bis (3,5-dimethyl-4-hydroxyphenol) propane, or a combination thereof. The monomer may include from 30-100 wt% of the polycarbonate; or in some aspects from 50-100 wt% of the polycarbonate.

In certain aspects the polycarbonate copolymer includes from about 10 mol % to about 90 mol % of the BPA monomer and from about 10 mol % to about 90 mol % of the DMBPC monomer. In other aspects the polycarbonate copolymer includes from about 45 mol % to about 55 mol % of the BPA monomer and from about 45 mol % to about 55 mol % of the DMBPC monomer.

In certain aspects the polycarbonate copolymer has a dissipation factor (Df) of less than 0.002, or less than 0.001, as determined according to a resonance cavity method. The resonance cavity method is a conventional method for dielectric testing. In further aspects the polycarbonate copolymer has a Df that is at least 50% lower than that of a polycarbonate homopolymer.

In some aspects the impact modifier component does not include a polar group, such as but not limited to ester groups such as those included in the polycarbonate component. In a particular aspect the impact modifier component includes styrene-ethylene/1-butene-styrene (SEBS), having the structure according to formula (2):

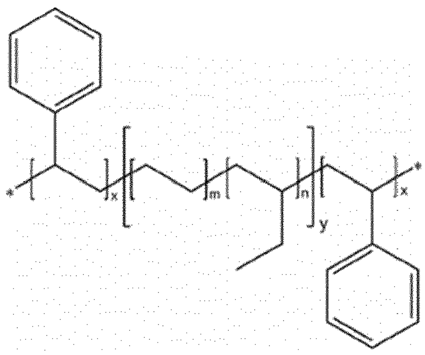

(2)

Of note, ethylene methyl acrylate (EMA) and methyl methacrylate butadiene styrene (MBS) have the structures shown in formulas (3) and (4), respectively:

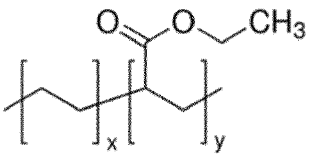

(3)

EMA

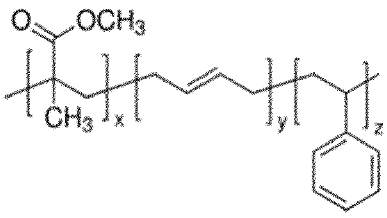

(4)

MBS

Each of these impact modifiers include ester (O-C=O) groups and would be excluded from certain aspects of the disclosure. In yet further aspects the impact modifier component does not include a core-shell polymer structure.

In some aspects the impact modifier component as dispersed in the composition has an average particle size of from about 0.5 micron (μm) to about 10 μm, as observed by scanning electron microscopy (SEM). In specific aspects the impact modifier component as dispersed in the composition has an average particle size of from about 1 μm to about

5 μm, or from about 1 μm to about 3 μm, as observed by scanning electron microscopy (SEM).

The hydrocarbon additive includes in some aspects a hydrogenated hydrocarbon resin, an acyclic saturated hydrocarbon resin, or a combination thereof. An exemplary hydrocarbon additive is Arkon™ 125, available from Arakawa Chemical, having the structure shown in formula (5):

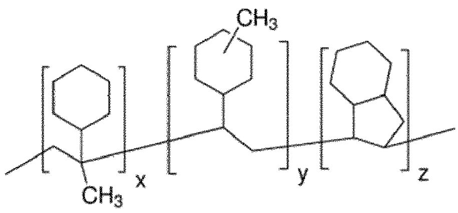

(5)

Hydrocarbon additives having different molecular weight and viscosity values can be used by varying the values for x, y and z in this formula. In some aspects the hydrocarbon additive has a molecular weight of from about 1000 to about 5000, or from about 1000 to about 1500.

It has been found in some aspects that the impact modifier component, when combined in the composition with the hydrocarbon additive, has a spherical morphology. Without inclusion of the hydrocarbon additive the impact modifier is observed to have an oblong morphology. A spherical morphology provides the compositions with good impact properties and also improved gloss properties, as described further herein.

In specific aspects the weight percent ratio of the hydrocarbon additive to the impact modifier in the composition is from 1:1 to 1:20, or from 1:5 to 1:10.

An exemplary reinforcing fillers for use in aspects of the disclosure includes glass fiber. In some aspects the glass fiber has a width/diameter ratio from 1:1 to 10:1, or from 1:1 to 1:4 in specific aspects. The glass fiber may have a diameter range of from 3 to 20 μm, or in more specific aspects from 5 to 15 μm. The glass fiber may include a mixture of glass fibers having different width/diameter ratios and/or fiber diameters.

In further aspects the glass fiber has a dielectric constant (Dk) of from about 4 to about 7 as determined according to a resonant cavity method at a frequency of from 1 to 20 gigahertz (GHz). In specific aspects the glass fiber has a Df of from about 0.0005 to about 0.005, or from 0.0007 to 0.004, as determined according to a resonant cavity method at a frequency of from 1 to 20 gigahertz (GHz).

In other aspects the polycarbonate copolymer includes from about 10 mol % to about 90 mol % of the BPA monomer and from about 10 mol % to about 90 mol % of the DMBPC monomer and the composition has a Dk of less than 4 and a Df of less than about 0.01 as determined according to a resonant cavity method. In some aspects the composition has a Dk of less than 3.5, or less than 3.0, and/or the composition has a Df of less than 0.005, or less than 0.003, as determined according to the SABIC Method.

In a specific aspect the impact modifier component has a linear, non-polarized polymer structure, and the composition has improved Izod impact properties as compared to a reference composition that includes a polarized impact modifier instead of the impact modifier component having a linear, non-polarized polymer structure. Izod impact properties may be determined according to ASTM D256. Improved Izod impact properties may include one or more of: (a) a notched Izod impact strength at least 10% higher at -20°C; (b) a notched Izod impact strength at least 10% higher at 23°C; and (c) an unnotched Izod impact strength at least 10% higher at 23°C.

In further aspects the impact modifier component has a linear, non-polarized polymer structure, and the composition has at least a 1% improvement in Izod impact properties as compared to a reference composition that does not include the hydrocarbon additive.

In certain aspects the impact modifier component has a linear, non-polarized polymer structure, and the composition has gloss properties that are at least 10% higher than those of a reference composition that includes a polarized impact modifier instead of the linear, non-polarized impact modifier. Gloss properties are determined according to ASTM D2457 or ASTM D523 at an angle of 20°, 60° or 85°. In some aspects the impact modifier component has a linear, non-polarized polymer structure, and the composition has gloss properties that are at least 10% higher than those of a reference composition that does not include the hydrocarbon additive.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to 5G mobile applications, cellular telephones, tablet computers, personal computers, notebook and portable computers, and other such equipment, medical applications, RFID applications, automotive applications, and the like. In a further aspect, the article is extrusion molded. In a still further aspect, the article is injection molded.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

a. from 10 wt% to 95 wt% of a polycarbonate component;
b. from 0.1 wt% to 50 wt% of a reinforcing filler;
c. from 0.1 wt% to 10 wt% of an impact modifier component having a linear polymer structure; and
d. from 0.1 wt% to 10 wt% of a hydrocarbon additive,

wherein the combined weight percent value of all components does not exceed 100 wt. %, and all weight percent values are based on the total weight of the composition.

Aspect 2. The thermoplastic composition according to Aspect 1, wherein the polycarbonate component comprises a polycarbonate homopolymer.

Aspect 3. The thermoplastic composition according to Aspect 1 or 2, wherein the polycarbonate component comprises a polycarbonate homopolymer, a polycarbonate copolymer, or a combination thereof.

Aspect 4. The thermoplastic composition according to any of Aspects 1 to 3, wherein the impact modifier component does not include a core-shell polymer structure.

Aspect 5. The thermoplastic composition according to any of Aspects 1 to 4, wherein the impact modifier component does not include a polar group.

Aspect 6. The thermoplastic composition according to any of Aspects 1 to 5, wherein the impact modifier

component comprises styrene-ethylene/1-butene-styrene (SEBS).

Aspect 7. The thermoplastic composition according to any of Aspects 1 to 6, wherein the hydrocarbon additive is a hydrogenated hydrocarbon resin, an acyclic saturated hydrocarbon resin, or a combination thereof.

Aspect 8. The thermoplastic composition according to any of Aspects 1 to 7, wherein the impact modifier as combined with the hydrocarbon additive has a spherical morphology.

Aspect 9. The thermoplastic composition according to any of Aspects 1 to 8, wherein the impact modifier component as dispersed in the composition has an average particle size of from about 0.5 to about 10 micron ($\mu$m), as observed by scanning electron microscopy (SEM).

Aspect 10. The thermoplastic composition according to any of Aspects 1 to 9, wherein the polycarbonate copolymer has a dissipation factor (Df) of less than 0.002 as determined according to a SABIC Method.

Aspect 11. The thermoplastic composition according to any of Aspects 1 to 10, wherein the polycarbonate copolymer comprises a monomer comprising dimethyl bisphenol cyclohexane (DMBPC) monomer, a bisphenol A (BPA) monomer, or a combination thereof.

Aspect 12. The thermoplastic composition according to Aspect 11, wherein the polycarbonate copolymer comprises a monomer having from 1 to 8 methyl groups on a benzyl ring.

Aspect 13. The thermoplastic composition according to Aspect 11 or 12, wherein the monomer comprises 2,2-bis (3-methyl-4-hydroxyphenol) propane, 2,2-bis (3,5-dimethyl-4-hydroxyphenol) propane, or a combination thereof.

Aspect 14. The thermoplastic composition according to any of Aspects 11 to 13, wherein the monomer comprises from 30% to 100% of the polycarbonate.

Aspect 15. The thermoplastic composition according to any of Aspects 11 to 14 , wherein the polycarbonate copolymer comprises from about 10 mol % to about 90 mol % of the BPA monomer and from about 10 mol % to about 90 mol % of the DMBPC monomer.

Aspect 16. The thermoplastic composition according to Aspect 15, wherein the polycarbonate copolymer comprises from about 45 mol % to about 55 mol % of the BPA monomer and from about 45 mol % to about 55 mol % of the DMBPC monomer.

Aspect 17. The thermoplastic composition according to any of Aspects 1 to 16, wherein the reinforcing filler comprises glass fiber.

Aspect 18. The thermoplastic composition according to Aspect 17, wherein the glass fiber has a dielectric constant (Dk) of from about 4 to about 7 as determined according to a resonant cavity method at a frequency of from 1 to 20 gigahertz (GHz).

Aspect 19. The thermoplastic composition according to Aspect 17 or 18, wherein the glass fiber has a Df of from about 0.0005 to about 0.005 as determined according to a resonant cavity method at a frequency of from 1 to 20 gigahertz (GHz).

Aspect 20. The thermoplastic composition according to any of Aspects 1 to 19, wherein the hydrocarbon additive has a molecular weight of from about 1000 to about 5000.

Aspect 21. The thermoplastic composition according to any of Aspects 1 to 20, wherein a weight percent ratio of the hydrocarbon additive to the impact modifier in the composition is from 1:1 to 1:20.

Aspect 22. The thermoplastic composition according to any of Aspects 1 to 21, wherein the polycarbonate copolymer comprises from about 10 mol % to about 90 mol % of the BPA monomer and from about 10 mol % to about 90 mol % of the DMBPC monomer and the composition has a Dk of less than 4 and a Df of less than about 0.01 as determined according to a SABIC Method.

Aspect 23. The thermoplastic composition according to any of Aspects 1 to 22, wherein the impact modifier component has a linear, non-polarized polymer structure, and wherein the composition has improved Izod impact properties as compared to a reference composition that includes a polarized impact modifier instead of the impact modifier component having a linear, non-polarized polymer structure, wherein Izod impact properties are determined according to ASTM D256.

Aspect 24. The thermoplastic composition according to Aspect 23, wherein the improved Izod impact properties comprise one or more of:

(a) a notched Izod impact strength at least 10% higher at -20°C;
(b) a notched Izod impact strength at least 10% higher at 23°C; and
(c) an unnotched Izod impact strength at least 10% higher at 23°C.

Aspect 25. The thermoplastic composition according to any of Aspects 1 to 24, wherein the impact modifier component has a linear, non-polarized polymer structure, and wherein the composition has at least a 1% improvement in Izod impact properties as compared to a reference composition that does not include the hydrocarbon additive, wherein Izod impact properties are determined according to ASTM D256.

Aspect 26. The thermoplastic composition according to any of Aspects 1 to 25, wherein the impact modifier

component has a linear, non-polarized polymer structure, wherein the composition has gloss properties that are at least 10% higher than those of a reference composition that includes a polarized impact modifier instead of the linear, non-polarized impact modifier, and wherein gloss properties are determined according to ASTM D2457 or ASTM D523 at an angle of 20°, 60° or 85°.

Aspect 27. The thermoplastic composition according to any of Aspects 1 to 26, wherein the impact modifier component has a linear, non-polarized polymer structure, wherein the composition has gloss properties that are at least 10% higher than those of a reference composition that does not include the hydrocarbon additive, and wherein gloss properties are determined according to ASTM D2457 or ASTM D523 at an angle of 20°, 60° or 85°.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1

Various compositions were formed according to Table 1.1:

**Table 1.1 - Comparative and Example Compositions**

| Description | Unit | C1.1 | C1.2 | C1.3 | C1.4 | C1.5 |
|---|---|---|---|---|---|---|
| Polycarbonate | % | 74.24 | 78.24 | 74.24 | 73.24 | 69.24 |
| Impact modifier (SEBS) | % | 5 | | | 5 | 5 |
| Antioxidant AO168 | % | 0.06 | 0.06 | 0.06 | 0.06 | 0.06 |
| Antioxidant AO1076 | % | 0.1 | 0.1 | 0.1 | 0.1 | 0.1 |
| Pentaerythritol Stearate (PETS) | % | 0.3 | 0.3 | 0.3 | 0.3 | 0.3 |
| Hydrocarbon (Arkon™ 125) | | | 1 | 5 | 1 | 5 |
| Glass fiber | % | 20 | 20 | 20 | 20 | 20 |
| Carbon black | % | 0.3 | 0.3 | 0.3 | 0.3 | 0.3 |
| Total: | % | 100 | 100 | 100 | 100 | 100 |

The glass fiber used in the Example 1 compositions is a conventional glass fiber having a Dk of about 7.0 and a Df of from 0.001-0.004. Properties of the compositions are shown in Table 1.2:

**Table 1.2 - Properties of Compositions of Table 1.1**

| Property | Test Method/Description | Unit | C1.1 | C1.2 | C1.3 | C1.4 | C1.5 |
|---|---|---|---|---|---|---|---|
| Specific Gravity | ASTM D792 | $g/cm^3$ | 1.3 | 1.3 | 1.3 | 1.3 | 1.3 |
| MVR | ASTM D1238, 300 °C/1.2 kg/300 s | $cm^3/10min$ | 15.1 | 15.3 | 16.8 | 16.4 | 19.3 |
| MVR | ASTM D1238, 300°C, 1.2 kg, 1080 s | $cm^3/10min$ | 15.3 | 20.3 | 21.0 | 19.2 | 23.2 |
| HDT | ASTM D648, 0.45 MPa, 3.2 mm | °C | 142 | 140 | 138 | 142 | 140 |
| HDT | ASTM D648, 1.82 MPa, 3.2 mm | °C | 138 | 136 | 134 | 138 | 136 |

(continued)

| Property | Test Method/Description | Unit | C1.1 | C1.2 | C1.3 | C1.4 | C1.5 |
|---|---|---|---|---|---|---|---|
| Flexural Modulus | ASTM D790, 3.2 mm, 1.27 mm/min | MPa | 5340 | 5570 | 6120 | 5200 | 4900 |
| Flexural Strength | ASTM D790, @yield, 3.2 mm, 1.27 mm/min | MPa | 136 | 151 | 156 | 136 | 134 |
| Tensile Modulus | ASTM D638, 5 mm/min | MPa | 5750 | 5980 | 6459 | 5687 | 5670 |
| Tensile Strength | ASTM D638, @break, 5 mm/min | MPa | 86 | 99 | 105 | 87 | 89 |
| Tensile Elongation | ASTM D638, @break, 5 mm/min | % | 2.8 | 2.8 | 2.6 | 2.9 | 2.8 |
| Notched Izod | ASTM D256, -20°C, 5 lbf/ft | J/m | 103 | 66 | 105 | 105 | 102 |
| Notched Izod | ASTM D256, 23°C, 5 lbf/ft | J/m | 150 | 78 | 127 | 151 | 142 |
| Unnotched Izod | ASTM D256, 23°C, 5 lbf/ft | J/m | 659 | 658 | 609 | 677 | 575 |
| Gloss | ASTM D2457, 20° | | 59 | 73 | 57 | 74 | 75 |
| Gloss | ASTM D2457, 60° | | 83 | 90 | 80 | 93 | 94 |
| Gloss | ASTM D523, 85° | | 95 | 97 | 95 | 98 | 98 |
| Rockwell Hardness | ASTM D785, R scale | | 114 | 121 | 121 | 115 | 114 |

Scanning Electron Microscopy (SEM) images of several of the compositions are shown in FIGS. 1A-B, 2A-B, 3A-B, 4A-B, 5A-B, 6A-B and 7A-B. The images show a significant change in impact modifier morphology. In C1.1 (FIGS. 1A and 1B), the impact modifiers have different shapes. Some are spherical but most are oblong. The impact modifier size is greater than 1 micron ($\mu$m). The impact modifier (rubber) sizes are large enough to offer good impact; as shown in Table 1.2, notched Izod impact strength at -20°C is greater than 100 J/m, notched Izod impact strength at 23°C is greater than 150 J/m, and unnotched Izod impact strength at 23°C is greater than 650 J/m. The non-uniform distribution offers large scattering properties, but gloss is less than desirable.

Composition C1.4 including a hydrocarbon additive shows the impact modifier as aggregating uniformly spherically. See FIGS. 2A, 2B. No oblong aggregations were observed. The particle size ranged from about 1 $\mu$m to 3 $\mu$m. The impact modifier (rubber) sizes were large enough to offer comparable and/or better mechanical properties compared to composition C1.1. The rubber dispersion - uniformly spherical and having a narrow diameter distribution - was sufficient to produce a high gloss.

Composition C1.5 included 5 wt% hydrocarbon additive. As shown in FIGS. 3A and 3B, the impact modifier (rubber) aggregations are still spherical but the number of small particles (diameter around and below 1 $\mu$m) substantially increases. The presence and increase of small rubber particles leads to decreased impact; as shown in Table 1.2 notched Izod impact strength at 23°C was less than 150 J/m and unnotched Izod impact strength at 23°C was less than 600 J/m.

The positive results in Table 1.2 were identified when an impact modifier component having a linear polymer structure was included in the composition with a hydrocarbon additive. Such impact modifiers (e.g., SEBS) have a low affinity to polycarbonate. Comparative compositions including other types of impact modifiers (e.g., linear impact modifiers having a high affinity to polycarbonate (EMA) and core-shell impact modifiers (MBS)) were prepared and tested. The compositions are shown in Table 1.3 and properties shown in Table 1.4:

**Table 1.3 - Compositions Including Different Impact Modifiers**

| Description | Unit | C1.6 | C1.7 | C1.8 | C1.9 |
|---|---|---|---|---|---|
| Polycarbonate | % | 74.24 | 74.24 | 73.24 | 73.24 |
| Impact modifier MBS | | 5 | | 5 | |
| Impact modifier EMA | | | 5 | | 5 |
| Antioxidant AO168 | % | 0.06 | 0.06 | 0.06 | 0.06 |
| Antioxidant AO1076 | % | 0.1 | 0.1 | 0.1 | 0.1 |
| Pentaerythritol tetrastearate (PETS) | % | 0.3 | 0.3 | 0.3 | 0.3 |

(continued)

| Description | Unit | C1.6 | C1.7 | C1.8 | C1.9 |
|---|---|---|---|---|---|
| Hydrocarbon (Arkon™ 125) | | | | 1 | 1 |
| Glass fiber | % | 20 | 20 | 20 | 20 |
| Carbon black | % | 0.3 | 0.3 | 0.3 | 0.3 |
| **Total:** | % | 100 | 100 | 100 | 100 |

**Table 1.4 - Properties of Compositions of Table 1.3**

| Property | Test Method/Description | Unit | C1.6 | C1.7 | C1.8 | C1.9 |
|---|---|---|---|---|---|---|
| Specific Gravity | ASTM D792 | $g/cm^3$ | 1.3 | 1.3 | 1.3 | 1.3 |
| MVR | ASTM D1238, 300 °C/1.2 kg/300 s | $cm^3$/10min | 10.0 | 12.6 | 10.7 | 14.4 |
| MVR | ASTM D1238, 300°C, 1.2 kg, 1080 s | $cm^3$/10min | 12.2 | 14.1 | 11.7 | 16.8 |
| HDT | ASTM D648, 0.45 MPa, 3.2 mm | °C | 139 | 143 | 140 | 142 |
| HDT | ASTM D648, 1.82 MPa, 3.2 mm | °C | 134 | 139 | 135 | 139 |
| Flexural Modulus | ASTM D790, 3.2 mm, 1.27 mm/min | MPa | 4980 | 5400 | 5090 | 5210 |
| Flexural Strength | ASTM D790, @yield, 3.2 mm, 1.27 mm/min | MPa | 121 | 140 | 125 | 138 |
| Tensile Modulus | ASTM D638, 5 mm/min | MPa | 5252 | 5606 | 5457 | 5634 |
| Tensile Strength | ASTM D638, @break, 5 mm/min | MPa | 77 | 87 | 84 | 88 |
| Tensile Elongation | ASTM D638, @break, 5 mm/min | % | 2.5 | 3.1 | 2.5 | 2.9 |
| Notched Izod | ASTM D256, -20°C, 5 lbf/ft | J/m | 94 | 99 | 78 | 91 |
| Notched Izod | ASTM D256, 23°C, 5 lbf/ft | J/m | 101 | 137 | 91 | 129 |
| Unnotched Izod | ASTM D256, 23°C, 5 lbf/ft | J/m | 454 | 598 | 434 | 579 |
| Gloss | ASTM D2457, 20° | | 73 | 62 | 76 | 74 |
| Gloss | ASTM D2457, 60° | | 89 | 89 | 92 | 93 |
| Gloss | ASTM D523, 85° | | 97 | 97 | 98 | 98 |
| Rockwell Hardness | ASTM D785, R scale | | 118 | 112 | 118 | 112 |

The As shown in Table 1.4 and illustrated in FIGS. 4A-7B, the addition of a hydrocarbon additive significantly reduces the rubber particle size, leading to poor mechanical performance. Specifically, it was observed that although the hydrocarbon additive allows the composition to maintain the hardness level and slightly increase the gloss level, a drop in mechanical properties and in particular impact strength was observed. So it can be concluded that the combination of the hydrocarbon additive and an impact modifier such as EMA or MBS is much less effective than the combination of hydrocarbon additive and an impact modifier such as SEBS.

**Example 2**

Compositions including a polycarbonate copolymer (DMBPC) were formed according to Table 2.1:

**Table 2.1 - Compositions Including DMBPC**

| Description | Unit | C2.1 | C2.2 | C2.3 | C2.4 |
|---|---|---|---|---|---|
| Polycarbonate | % | 24 | 24 | 30 | 30 |
| Polycarbonate | % | 14.24 | 14.24 | 18.24 | 18.24 |
| Copolymer PC containing 50% DMBPC | % | 20 | 20 | 20 | 20 |

(continued)

| Description | Unit | C2.1 | C2.2 | C2.3 | C2.4 |
|---|---|---|---|---|---|
| SEBS | % | 8 | 7 | 8 | 7 |
| Hydrocarbon (Arkon™ 125) | % | | 1 | | 1 |
| AO168 | % | 0.06 | 0.06 | 0.06 | 0.06 |
| AO1076 | % | 0.1 | 0.1 | 0.1 | 0.1 |
| PETS | % | 0.3 | 0.3 | 0.3 | 0.3 |
| Low Dk Glass Fiber | | 33 | 33 | 23 | 23 |
| Carbon black | % | 0.3 | 0.3 | 0.3 | 0.3 |
| **Total:** | % | 100 | 100 | 100 | 100 |

The glass fiber used in the Example 2 compositions is a low Dk glass fiber having a Dk less than 7.0 (e.g., 4.5) and a Df less than 0.002 (preferably less than 0.001). Properties of the compositions are shown in Table 2.2:

**Table 2.2 - Properties of Compositions of Table 2.1**

| Property | Test Method/Description | Unit | C2.1 | C2.2 | C2.3 | C2.4 |
|---|---|---|---|---|---|---|
| Specific Gravity | ASTM D792 | $g/cm^3$ | 1.4 | 1.4 | 1.3 | 1.3 |
| MVR | ASTM D1238, 300 °C/1.2 kg/300 s | $cm^3/10$ min | 3.7 | 4.1 | 6.1 | 6.2 |
| HDT | ASTM D648, 0.45 MPa, 3.2 mm | °C | 144 | 144 | 144 | 144 |
| HDT | ASTM D648, 1.82 MPa, 3.2 mm | °C | 140 | 140 | 140 | 140 |
| Flexural Modulus | ASTM D790, 3.2 mm, 1.27 mm/min | MPa | 6300 | 6400 | 5000 | 5000 |
| Flexural Strength | ASTM D790, @yield, 3.2 mm, 1.27 mm/min | MPa | 140 | 150 | 140 | 140 |
| Flexural Modulus | ISO 178, 3.2 mm, 1.27 mm/min | MPa | 6800 | 6960 | 5400 | 5470 |
| Flexural Strength | ISO 178, 3.2 mm, 1.27 mm/min | MPa | 150 | 160 | 145 | 150 |
| Tensile Modulus | ASTM D638, @break, 5 mm/min | MPa | 7000 | 7090 | 5700 | 5710 |
| Tensile Strength | ASTM D638, @break, 5 mm/min | MPa | 90 | 100 | 90 | 95 |
| Tensile Elongation | ASTM D638, @break, 5 mm/min | % | 2.3 | 2.4 | 3.1 | 3.1 |
| Tensile Modulus | ISO D523, 5 mm/min | MPa | 7200 | 7310 | 5750 | 5820 |
| Tensile Strength | ISO 527, @break, 5 mm/min | MPa | 100 | 110 | 95 | 100 |
| Tensile Elongation | ISO 527, @break, 5 mm/min | % | 2.3 | 2.4 | 3.1 | 3.1 |
| Notched Izod | ASTM D256, -20°C, 5 lbf/ft | J/m | 100 | 110 | 105 | 110 |
| Notched Izod | ASTM D256, 23°C, 5 lbf/ft | J/m | 115 | 120 | 130 | 130 |
| Unnotched Izod | ASTM D256, 23°C, 5 lbf/ft | J/m | 550 | 600 | 700 | 700 |
| Dielectric Constant | Resonant cavity method, 1.9GHz | | 3.07 | 3.06 | 2.95 | 2.95 |
| Dissipation Factor | Resonant cavity method, 1.9GHz | | 0.0045 | 0.0045 | 0.0045 | 0.0044 |
| Dielectric Constant | Resonant cavity method, 5GHz | | 3.09 | 3.08 | 2.94 | 2.94 |
| Dissipation Factor | Resonant cavity method, 5GHz | | 0.0044 | 0.0044 | 0.0044 | 0.0044 |

As shown in Table 2.2, compositions including polycarbonate, a DMBPC-PC copolymer, the impact modifier (SEBS) and hydrocarbon additive had improved or maintained mechanical and flow performance as compared to the compositions that included only SEBS without the hydrocarbon additive. In addition, the dielectric properties increased or were at least maintained. These results were observed with different glass fiber loadings; e.g., at 33% (C2.1, C2.2) and 23% (C2.3, C2.4).

Compositions including only DMBPC as the polycarbonate component were formed according to Table 2.3:

**Table 2.3 - Compositions Including only DMBPC as Polycarbonate**

| Description | Unit | C2.5 | C2.6 | C2.7 | C2.8 |
|---|---|---|---|---|---|
| Copolymer PC containing 50% DMBPC (DMX 50) | % | 59.24 | 68.24 | 64.24 | 59.24 |
| SEBS | % | 10 | | | 5 |
| Hydrocarbon (Arkon™ 125) | % | | 1 | 5 | 5 |
| AO168 | % | 0.06 | 0.06 | 0.06 | 0.06 |
| AO1076 | % | 0.1 | 0.1 | 0.1 | 0.1 |
| PETS | % | 0.3 | 0.3 | 0.3 | 0.3 |
| Low Dk Glass Fiber | | 30 | 30 | 30 | 30 |
| Carbon black | % | 0.3 | 0.3 | 0.3 | 0.3 |
| **Total:** | % | 100 | 100 | 100 | 100 |

Properties of these compositions are shown in Table 2.4:

**Table 2.4 - Properties of Compositions of Table 2.3**

| Property | Test Method/Description | Unit | C2.5 | C2.6 | C2.7 | C2.8 |
|---|---|---|---|---|---|---|
| Specific Gravity | ASTM D792 | $g/cm^3$ | 1.3 | 1.4 | 1.4 | 1.3 |
| MVR | ASTM D1238, 300 °C/1.2 kg/300 s | $cm^3$/10min | 4.5 | 5.6 | 6.8 | 5.9 |
| HDT | ASTM D648, 0.45 MPa, 3.2 mm | °C | 138 | 138 | 135 | 135 |
| HDT | ASTM D648, 1.82 MPa, 3.2 mm | °C | 133 | 133 | 130 | 130 |
| Flexural Modulus | ASTM D790, 3.2 mm, 1.27 mm/min | MPa | 5650 | 7600 | 7950 | 5900 |
| Flexural Strength | ASTM D790, @yield, 3.2 mm, 1.27 mm/min | MPa | 135 | 185 | 185 | 140 |
| Flexural Modulus | ISO 178, 3.2 mm, 1.27 mm/min | MPa | \ | 6570 | 6640 | 6400 |
| Flexural Strength | ISO 178, 3.2 mm, 1.27 mm/min | MPa | \ | 160 | 160 | 155 |
| Tensile Modulus | ASTM D638, @break, 5 mm/min | MPa | 6400 | 8130 | 8400 | 6700 |
| Tensile Strength | ASTM D638, @break, 5 mm/min | MPa | 90 | 125 | 135 | 105 |
| Tensile Elongation | ASTM D638, @break, 5 mm/min | % | 2.6 | 2.6 | 2.7 | 2.6 |
| Tensile Modulus | ISO 527, 5 mm/min | MPa | \ | 7940 | 8060 | 6600 |
| Tensile Strength | ISO 527, @break, 5 mm/min | MPa | \ | 120 | 120 | 105 |
| Tensile Elongation | ISO 527, @break, 5 mm/min | % | \ | 2.2 | 2.3 | 2.5 |
| Notched Izod | ASTM D256, -20°C, 5 lbf/ft | J/m | \ | 70 | 80 | 85 |
| Notched Izod | ASTM D256, 23°C, 5 lbf/ft | J/m | 80 | 70 | 85 | 90 |
| Unnotched Izod | ASTM D256, 23°C, 5 lbf/ft | J/m | 450 | 350 | 350 | 350 |

(continued)

| Property | Test Method/Description | Unit | C2.5 | C2.6 | C2.7 | C2.8 |
|---|---|---|---|---|---|---|
| Dielectric Constant | Resonant cavity method, 1.9GHz | | 3.00 | 3.07 | 3.04 | 3.01 |
| Dissipation Factor | Resonant cavity method, 1.9GHz | | 0.0033 | 0.0033 | 0.0032 | 0.0031 |
| Dielectric Constant | Resonant cavity method, 5GHz | | 3.02 | 3.02 | 3.01 | 2.98 |
| Dissipation Factor | Resonant cavity method, 5GHz | | 0.0035 | 0.0034 | 0.0033 | 0.0033 |

As shown in Table 2.4, compositions including DMBPC-PC, no conventional polycarbonate, the impact modifier (SEBS) and hydrocarbon additive had comparative or higher impact properties and comparable or better dielectric properties than the composition C2.5 that does not include the hydrocarbon additive.

Further, comparing C2.5 with C2.6 and C2.7 it was observed that even if the impact modifier is removed and replaced with the hydrocarbon additive, the compositions have improved mechanical properties (flexural and tensile), comparable or higher impact properties, and comparable or improved dielectric performance.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a. from 10 wt% to 95 wt% of a polycarbonate component;
b. from 0.1 wt% to 50 wt% of a reinforcing filler;
c. from 0.1 wt% to 10 wt% of an impact modifier component having a linear polymer structure; and
d. from 0.1 wt% to 10 wt% of a hydrocarbon additive,

wherein the combined weight percent value of all components does not exceed 100 wt. %, and all weight percent values are based on the total weight of the composition.

**2.** The thermoplastic composition according to claim 1, wherein the polycarbonate component comprises a polycarbonate homopolymer, a polycarbonate copolymer, or a combination thereof.

**3.** The thermoplastic composition according to claim 1 or 2, wherein the impact modifier component does not include a polar group.

**4.** The thermoplastic composition according to any of claims 1 to 3, wherein the impact modifier component comprises styrene-ethylene/1-butene-styrene (SEBS).

**5.** The thermoplastic composition according to any of claims 1 to 4, wherein the hydrocarbon additive is a hydrogenated hydrocarbon resin, an acyclic saturated hydrocarbon resin, or a combination thereof.

**6.** The thermoplastic composition according to any of claims 1 to 5, wherein the impact modifier as combined with the hydrocarbon additive has a spherical morphology.

**7.** The thermoplastic composition according to any of claims 1 to 6, wherein the impact modifier component as dispersed in the composition has an average particle size of from about 0.5 to about 10 micron (μm), as observed by scanning electron microscopy (SEM).

**8.** The thermoplastic composition according to any of claims 1 to 7, wherein the polycarbonate copolymer comprises a monomer comprising dimethyl bisphenol cyclohexane (DMBPC) monomer, a bisphenol A (BPA) monomer, or a combination thereof.

**9.** The thermoplastic composition according to claim 8, wherein the monomer comprises 2,2-bis (3-methyl-4-hydroxyphenol) propane, 2,2-bis (3,5-dimethyl-4-hydroxyphenol) propane, or a combination thereof.

**10.** The thermoplastic composition according to claim 8 or 9, wherein the monomer comprises from 30% to 100% of the polycarbonate.

**11.** The thermoplastic composition according to any of claims 8 to 10 , wherein the polycarbonate copolymer comprises from about 10 mol % to about 90 mol % of the BPA monomer and from about 10 mol % to about 90 mol % of the DMBPC monomer.

**12.** The thermoplastic composition according to claim 11, wherein the polycarbonate copolymer comprises from about 45 mol % to about 55 mol % of the BPA monomer and from about 45 mol % to about 55 mol % of the DMBPC monomer.

**13.** The thermoplastic composition according to any of claims 1 to 12, wherein the reinforcing filler comprises glass fiber, and wherein the glass fiber has a dielectric constant (Dk) of from about 4 to about 7 as determined according to a resonant cavity method at a frequency of from 1 to 20 gigahertz (GHz).

**14.** The thermoplastic composition according to any of claims 1 to 13, wherein:

the impact modifier component has a linear, non-polarized polymer structure;
the composition has improved Izod impact properties as compared to a reference composition that includes a polarized impact modifier instead of the impact modifier component having a linear, non-polarized polymer structure;
Izod impact properties are determined according to ASTM D256; and
the improved Izod impact properties comprise one or more of:

(a) a notched Izod impact strength at least 10% higher at -20°C;
(b) a notched Izod impact strength at least 10% higher at 23°C; and
(c) an unnotched Izod impact strength at least 10% higher at 23°C.

**15.** The thermoplastic composition according to any of claims 1 to 14, wherein the impact modifier component has a linear, non-polarized polymer structure, and:

wherein the composition has gloss properties that are at least 10% higher than those of a reference composition that includes a polarized impact modifier instead of the linear, non-polarized impact modifier, and wherein gloss properties are determined according to ASTM D2457 or ASTM D523 at an angle of 20°, 60° or 85°; or
the composition has gloss properties that are at least 10% higher than those of a reference composition that does not include the hydrocarbon additive, and wherein gloss properties are determined according to ASTM D2457 or ASTM D523 at an angle of 20°, 60° or 85°.

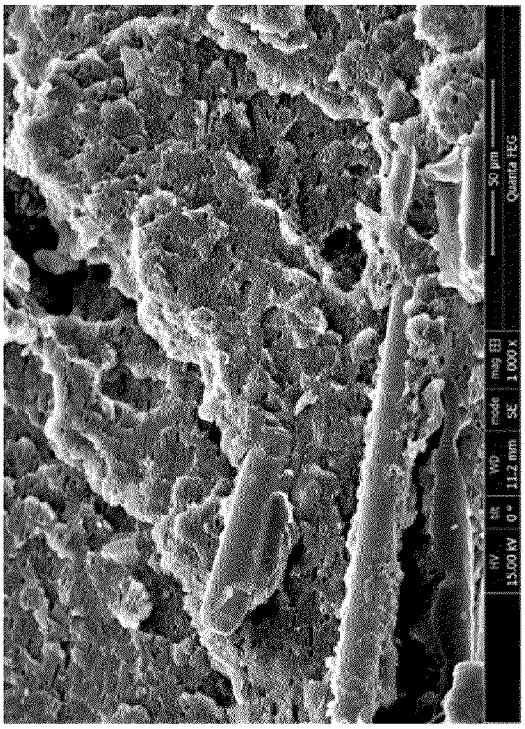


FIG. 1A (C1.1, 1000x)

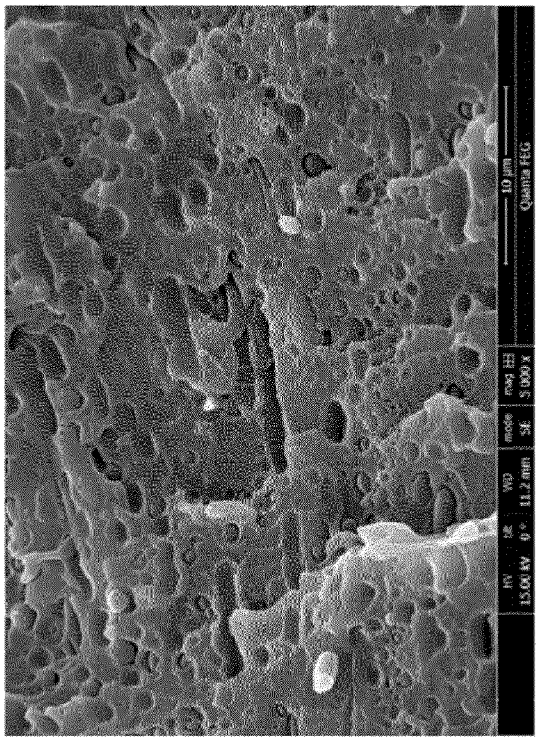


FIG. 1B (C1.1, 5000x)

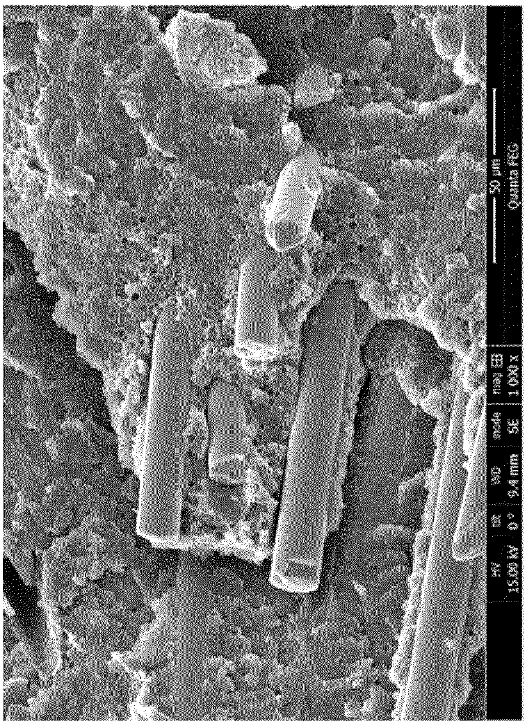


FIG. 2A (C1.4, 1000x)

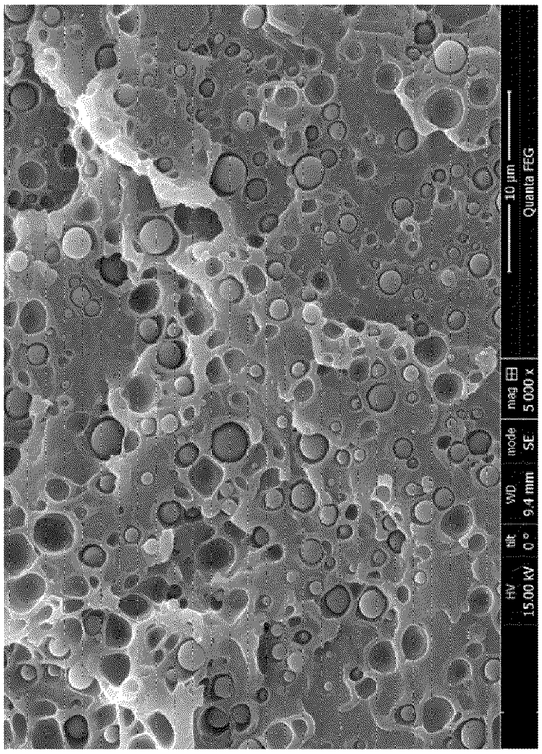


FIG. 2B (C1.4, 5000x)

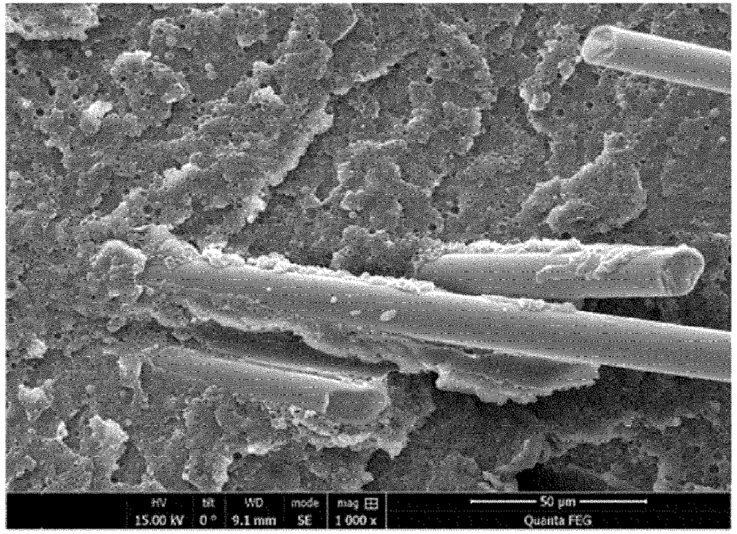


FIG. 3A (C1.5, 1000x)

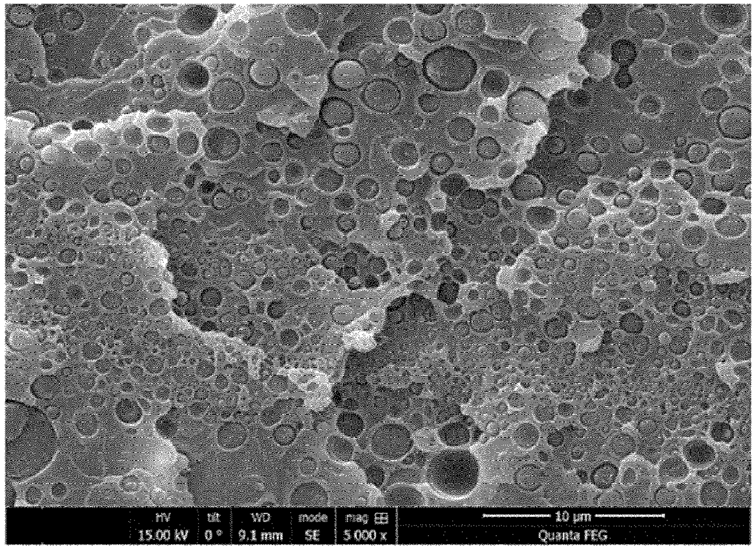


FIG. 3B (C1.5, 5000x)

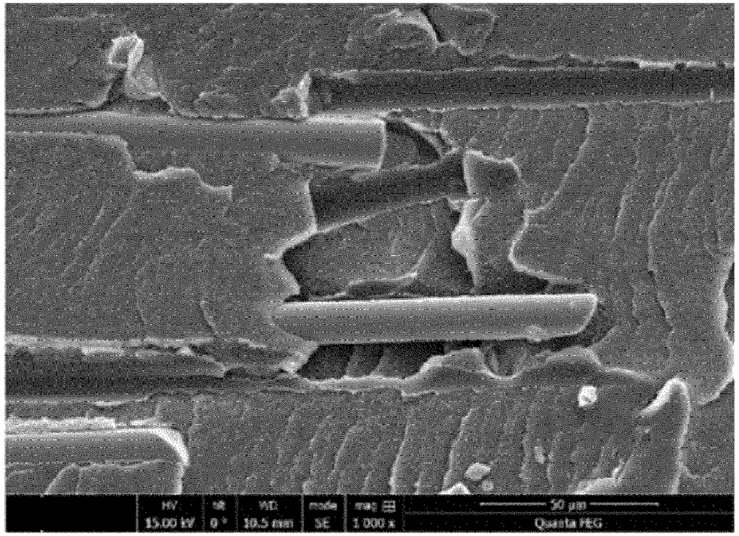


FIG. 4A (C1.6, 1000x)

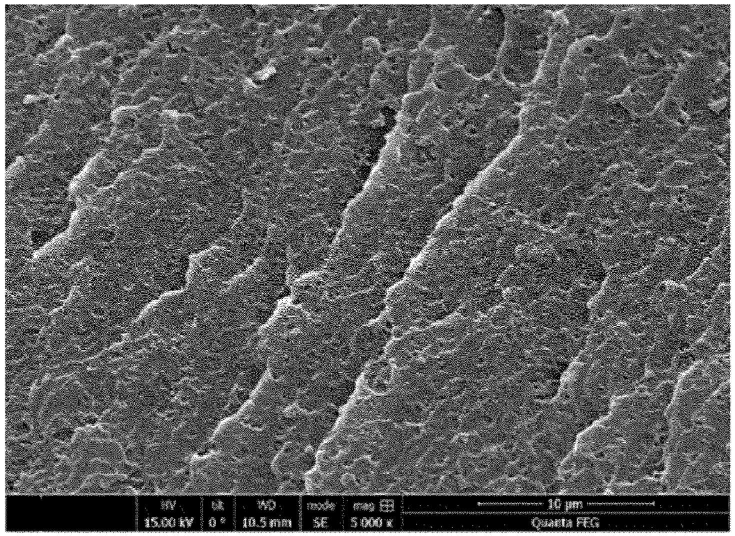


FIG. 4B (C1.6, 5000x)

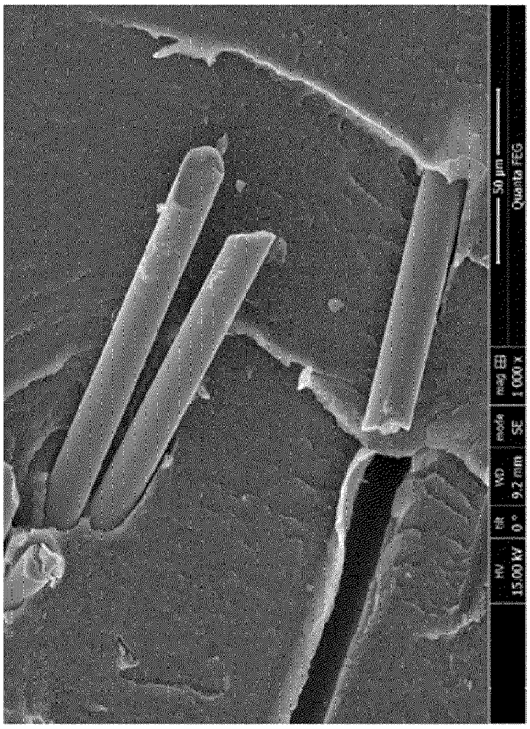

FIG. 5A (C1.8, 1000x)

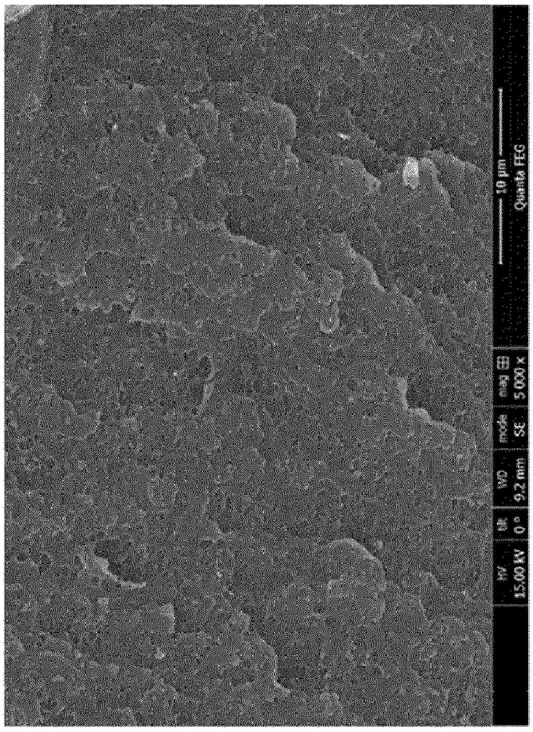

FIG. 5B (C1.8, 5000x)

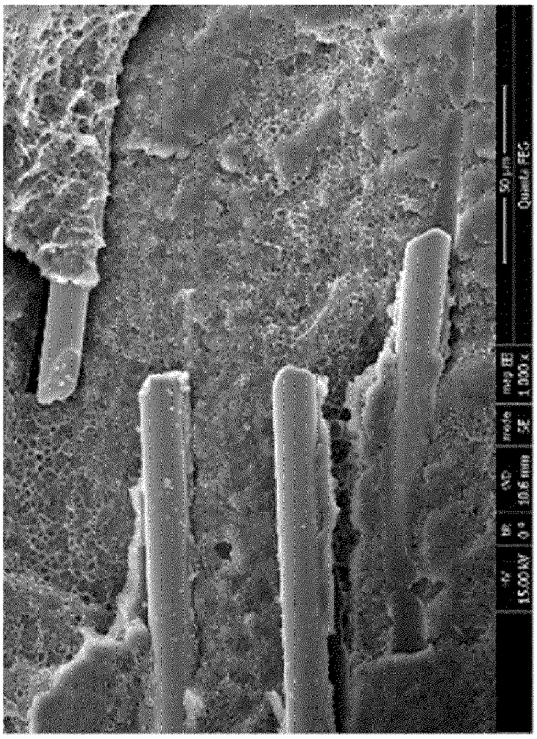

FIG. 6A (C1.7, 1000x)

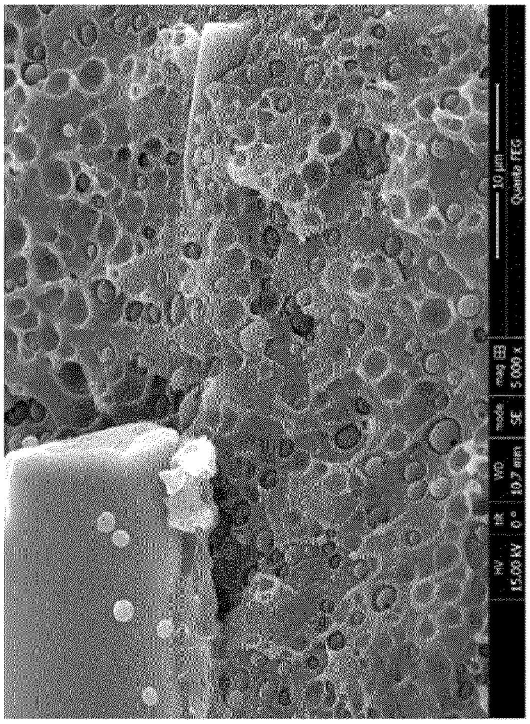

FIG. 6B (C1.7, 5000x)

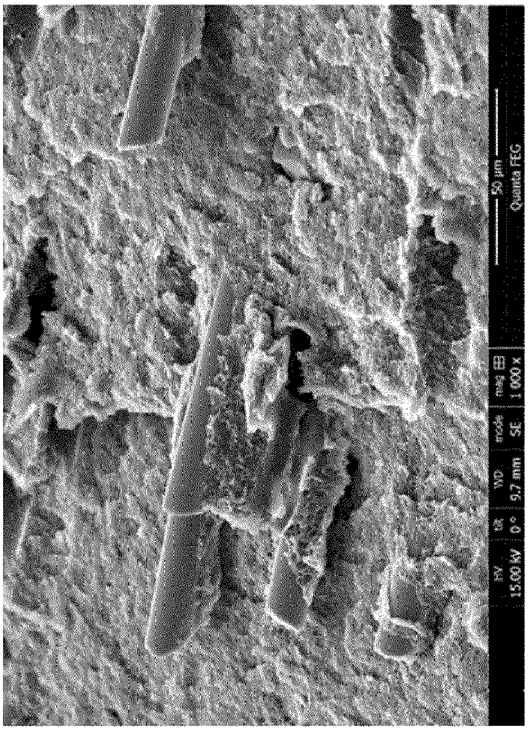


FIG. 7A (C1.9, 1000x)

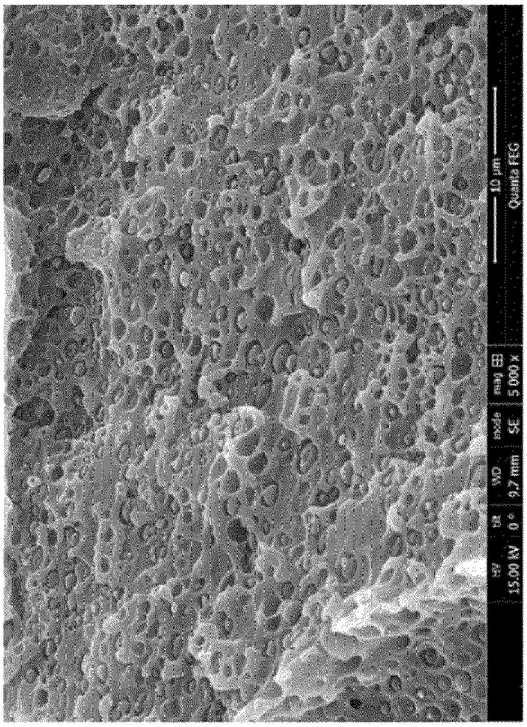


FIG. 7B (C1.9, 5000x)

Europäisches Patentamt
European Patent Office
Office européen des brevets

# EUROPEAN SEARCH REPORT

Application Number
EP 21 18 4348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/190474 A1 (SABIC INNOVATIVE PLASTICS IP [NL]) 27 December 2013 (2013-12-27) * tables 1-3 * * claims 1-35 * ----- | 1-15 | INV. C08L69/00 |
| X | WO 03/095558 A1 (DSM IP ASSETS BV [NL]; VAN HARTINGSVELDT EDWIN ADRIAA [NL] ET AL.) 20 November 2003 (2003-11-20) * examples 1-4 * * tables 1-3 * * claims 1-11 * ----- | 1-15 | |
| X | WO 2016/103161 A1 (SABIC GLOBAL TECHNOLOGIES BV [NL]) 30 June 2016 (2016-06-30) * tables 1-5 * * claims 1-20 * ----- | 1-15 | |

TECHNICAL FIELDS SEARCHED (IPC)
C08L

2

The present search report has been drawn up for all claims

| Place of search | Date of completion of the search | Examiner |
|---|---|---|
| The Hague | 21 December 2021 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 18 4348

This annex lists the patent family members relating to the patent documents cited in the above-mentioned European search report. The members are as contained in the European Patent Office EDP file on
The European Patent Office is in no way liable for these particulars which are merely given for the purpose of information.

21-12-2021

| Patent document cited in search report | Publication date | Patent family member(s) | Publication date |
|---|---|---|---|
| WO 2013190474 A1 | 27-12-2013 | CN 104428343 A | 18-03-2015 |
| | | EP 2864391 A1 | 29-04-2015 |
| | | KR 20150023573 A | 05-03-2015 |
| | | US 2013345347 A1 | 26-12-2013 |
| | | WO 2013190474 A1 | 27-12-2013 |
| WO 03095558 A1 | 20-11-2003 | AT 330997 T | 15-07-2006 |
| | | AU 2003224511 A1 | 11-11-2003 |
| | | CN 1653132 A | 10-08-2005 |
| | | DE 60306364 T2 | 14-06-2007 |
| | | EP 1501894 A1 | 02-02-2005 |
| | | JP 2005524749 A | 18-08-2005 |
| | | KR 20050007385 A | 17-01-2005 |
| | | NL 1020568 C2 | 11-11-2003 |
| | | US 2005256246 A1 | 17-11-2005 |
| | | WO 03095558 A1 | 20-11-2003 |
| WO 2016103161 A1 | 30-06-2016 | CN 107207841 A | 26-09-2017 |
| | | EP 3237543 A1 | 01-11-2017 |
| | | KR 20170084296 A | 19-07-2017 |
| | | US 2017369702 A1 | 28-12-2017 |
| | | WO 2016103161 A1 | 30-06-2016 |

EPO FORM P0459

For more details about this annex : see Official Journal of the European Patent Office, No. 12/82